(19) **Europäisches Patentamt / European Patent Office / Office européen des brevets**

(11) **EP 1 398 119 B1**

(12) **EUROPEAN PATENT SPECIFICATION**

(45) Date of publication and mention
of the grant of the patent:
**07.04.2010 Bulletin 2010/14**

(51) Int Cl.:
**B25F 5/00** *(2006.01)*   **G05B 13/02** *(2006.01)*

(21) Application number: **03020171.9**

(22) Date of filing: **05.09.2003**

(54) **Safety cut-off for power tool with rotating tool bit**

Sicherheitsschaltungsanordnung für drebaren Werkzeughalter

Dispositif d'arrêt de sécurité pour porte-outil rotatif

(84) Designated Contracting States:
**AT BE BG CH CY CZ DE DK EE ES FI FR GB GR HU IE IT LI LU MC NL PT RO SE SI SK TR**

(30) Priority: **11.09.2002 GB 0220951**

(43) Date of publication of application:
**17.03.2004 Bulletin 2004/12**

(73) Proprietor: **Black & Decker Inc.**
**Newark, DE 19711 (US)**

(72) Inventors:
• **Jacubasch, Andreas**
**68789 St Leon-Rot (DE)**
• **Frey, Christan**
**76131 Karlsruhe (DE)**

• **Plietsch, Reinhard**
**73257 Köngen (DE)**
• **Kuntze, Helge-Björn**
**76297 Stutensee (DE)**

(74) Representative: **Bell, Ian Stephen et al**
**Black & Decker**
**Patent Department**
**210 Bath Road**
**Slough**
**Berkshire SL1 3YD (GB)**

(56) References cited:
**US-A- 5 073 867      US-A- 5 584 619**
**US-A- 5 914 882      US-B1- 6 175 787**
**US-B1- 6 330 553**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention relates to a safety cut-off system for a hand held electrically powered tool with a rotating bit, which safety cut-off system can predict a blocking event in which the bit becomes stuck in a workpiece. In particular this invention relates to a safety cut-off system for an electrically powered rotary hammer.

It is a problem with hand held power tools with a rotating bit that during use of the tool the bit can sometimes become stuck in the workpiece in such a way that the bit can no longer rotate relative to the workpiece. In this case, the rotary drive to the bit causes the housing of the tool to rotate with respect to the stationary bit. A user of the tool who is gripping the handles of the tool housing may then be harmed. The detection of such blocking events has to be quick enough that the rotation of the tool housing can be stopped before the housing has rotated through an angle sufficient to harm the user. Also, the detection of these blocking events must be accurate so as to avoid the interruption of the rotary drive to the bit when working becomes difficult, that is false alarms should be avoided.

This problem has been addressed in US5,584,619 in which at pre-set time intervals the acceleration of the bit is measured and used to forecast the rotation angle of the tool over a predetermined time period. If the rotation angle exceeds a pre-set threshold value then the rotary drive to the bit is interrupted. The same problem has been addressed in US5,914,882 in which a deflection sensor periodically measures certain values which are then processed to determine rotational movement values, such as angular acceleration, angular velocity or deflection angle. The calculated rotational movement values then undergo non-linear processing, in particular using Fuzzy logic, subject to predetermined criteria in order to calculate a probability of accident. If this probability exceeds a predetermined threshold, then the rotary drive to the bit is interrupted. By calculating rotational movement values from one or more measured values this system considers more than an instantaneous picture of the operational condition of the tool at any one time and takes into account also recent behaviour of the tool. However, the above approaches require a full and detailed knowledge of the physical properties of the hammer which lead up to a blocking event.

The present invention aims to provide an accurate system for discriminating dangerous blocking events from safe operation of a tool with a rotating bit and for quickly interrupting rotary drive to the bit when dangerous blocking events occur and which does not rely on predictions of the physical properties of a hammer which precede a blocking event.

According to the present invention there is provided a safety cut-off system for a hand held electrically powered tool with a rotatingly driven bit for preventing accidents caused by the bit becoming jammed, said system comprising:

at least one sensor for detecting an operating condition of the tool and generating a sensor signal representative of the operating condition;
a cut-off arrangement for interrupting a rotary drive to the bit from a motor;
a processing unit responsive to the sensor signal or signals for generating a summed probability signal representing a probability of a blocking event and when the summed probability signal exceeds a pre-set threshold for causing activation of the cut-off arrangement;

characterised in that:

the processing unit includes a neural network.

The safety cut-off system utilises neural network technology to identify a blocking event. The sensor signals are processed by a neural network which has previously been trained to recognise sensor signal patterns which lead up to blocking events. This is done by inputting sample sets of sensor signals into the neural network and altering the membership functions applied by the nodes of the neural network until the summed probability signal becomes a reliable representation of the actual probability of a blocking event which it is known is associated with the sets of sensor signals. In this way an accurate probability of a blocking event can be generated without having to apply a full and detailed knowledge of the physical properties of the power tool which lead up to a blocking event.

The cut-off arrangement may by a mechanical or electromagnetic clutch which interrupts transmission through a drive gear arrangement between the motor and the tool or bit. Alternatively or additionally it may include a motor brake, such as an electronic motor brake for braking the motor.

The sensor or sensors may include one or more of:

a rotary or a linear accelerometer;
a current sensor for sensing the current drawn by the motor;
a rotation sensor for sensing the rotations per unit time of the motor; or
a torque sensor for sensing the torque between a handle of the hammer and a main housing of the hammer.

The processing unit may additionally include one or more signal conditioning units for processing the signal from the or one of the sensor(s) to generate a pre-conditioned signal and for inputting the pre-conditioned signal into the neural network. The signal conditioning may comprise filtering to remove noise, threshold evaluation, wavelet analysis or Fourier transform analysis.

The processing unit may include a neural network for generating a set of probability signals each probability signal comprising a function of the or a plurality of the sensor signal(s); an adder for adding the set of probability signals to generate the summed probability signal; and a comparator for generating a cut-off signal for activating the cut-off arrangement when the summed probability signal exceeds the pre-set threshold.

In a preferred embodiment the neural network is a fuzzy neural network which processes the sensor signals using fuzzy logic. Then training techniques from neural networks can be used to set the membership functions of a fuzzy logic circuit. This removes the trial and error factor in fuzzy logic and removes the requirement for detailed knowledge of the physical conditions occurring in the power tool before a blocking event occurs. This can enable the use of a more complex fuzzy circuit than would otherwise be achievable. Alternatively, the neural network may be a wavelet neural network in which the or at least one of the sensor signals undergoes a wavelet transformation. The use of a wavelet transform enables the improved extraction of information from the sensor signals.

According to a second aspect of the present invention there is provided a rotary hammer incorporating the safety cut-off system described above

According to a third aspect of the present invention there is provided a method for shutting-off rotary drive to a rotatably driven bit of a hand held electrically powered tool in order to prevent accidents caused by the bit becoming jammed, said method comprising the steps of:

detecting one or more operating condition of the tool and generating a sensor signal representative of the or each operating condition;

generating in response to the sensor signal or signals a summed probability signal representing a probability of a blocking event;

causing generation of a cut-off signal when the summed probability signal exceeds a pre-set threshold; and

using the cut-off signal to actuate the shutting-off of rotary drive to the bit, characterised in that

the step of generating a summed probability signal representing a probability of a blocking event utilises neural network processing steps.

One form of a hand held electrically powered tool having a rotating bit and incorporating a safety cut-off according to the present invention will now be described by way of example with reference to the accompanying drawings in which:

Figure 1 shows a partially cutaway longitudinal cross section through a rotary hammer incorporating a safety cut-off system according to the present invention;

Figure 2 shows a block diagram of the safety cut-off system used in the hammer of Figure 1;

Figure 3 shows a wavelet transform neural network which can be used as the neural network in Figure 2;

Figure 4A shows a typical input signal s(t) as it varies over time;

Figure 4B shows a Fourier transform of the input signal s(t) in the frequency domain;

Figure 4C shows a wavelet transform of the input signal s(t) in the frequency domain;

Figure 5 shows schematically in more detail a portion of the neural network unit of Figure 3 suitable for processing any one of the five input signals; and

Figure 6 shows a portion of the neural network unit of Figure 2 suitable for processing two of the five input signals where a fuzzy-neuro scheme is used.

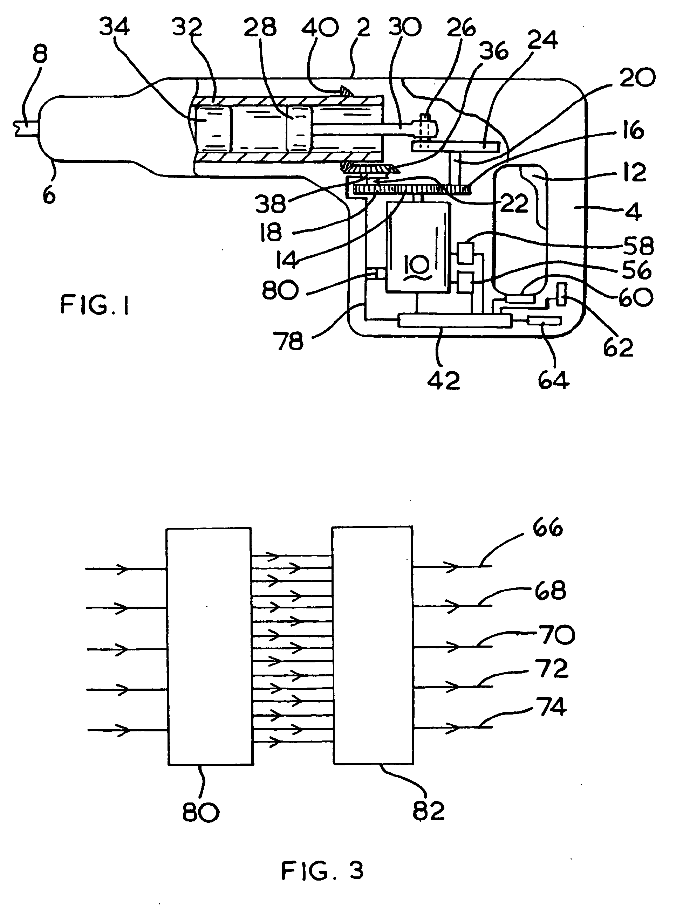

Figure 1 shows schematically a rotary hammer having a main housing (2), a rear handle (4) and a tool holder (6) which latter is located at the front end of the hammer. A tool or bit (8) can be non-rotatably and releasably locked within the tool holder so as to reciprocate to a limited extent within the tool holder, as is well known in the art. The hammer is powered by an electric motor (10) which is connected to an external electricity supply and is actuated when a trigger switch (12) mounted adjacent to the rear handle is depressed.

The armature shaft of the motor (10) rotatingly drives a drive gear (14), which itself drives two driven gears (16, 18) which are each non-rotatably mounted on a respective spindle (20, 22) within the hammer housing (2). The spindle (20) rotatingly drives a crank plate (24), which via an eccentric crank pin (26) reciprocatingly drives a piston (28) via a crank arm (30). The piston is slideably mounted within a hollow spindle (32), which hollow spindle is rotatably mounted via bearings (not-shown) in the main housing (2) of the hammer. A ram (34) is also slideably mounted within the spindle (32) and there is a seal located between the periphery of the ram and the internal surface of the spindle and also between the periphery of piston and the internal surface of the spindle. In this way a closed air cushion is formed within the spindle (32), between the piston (28) and ram (34) during normal operation of the hammer, so that the reciprocation of the piston (28) reciprocatingly drives the ram (34) via the closed air cushion. As the ram (34) reciprocates it repeatedly impacts a beatpiece, which beatpiece transfers these impacts to a tool or bit (8) fitted within the tool holder (6), in a manner well known in the art. The impacts from the tool or bit (8) are transmitted to a workpiece agaist which the tool or bit (8) is urged. When the tool or bit (8) is removed from the workpiece, the hammer enters its idle mode and the air cushion is vented, as is well known in the art.

The driven spindle (22) rotatingly drives a first bevel gear (36) via an electromagnetic clutch (38). The first bevel gear (36) rotatingly drives a second bevel gear (40), which second bevel gear is non-rotatably mounted on the hollow spindle (32). Rotation of the spindle (32) cause the tool holder (6) and thereby a tool or bit (8) mounted within the tool holder to be rotatingly driven.

Therefore, when the trigger switch (12) of the motor (10) is depressed, the armature shaft rotatingly drives the drive gear (14) which rotatingly drives the driven gears (16, 18) which themselves rotatingly drive respective shafts (20, 22). The drive shaft (20) drives a crank arrangement (24, 26, 30) to reciprocatingly drive the piston (28) within the spindle to thereby cause repeated impacts to be transmitted to the tool or bit (8). Simultaneously, the drive shaft (18) rotatingly drives the spindle (32) via the electromagnetic clutch (38) and bevel gears (36, 40). The spindle (32) rotatingly drives the tool or bit (8), via the tool holder (6) and rotary hammering occurs.

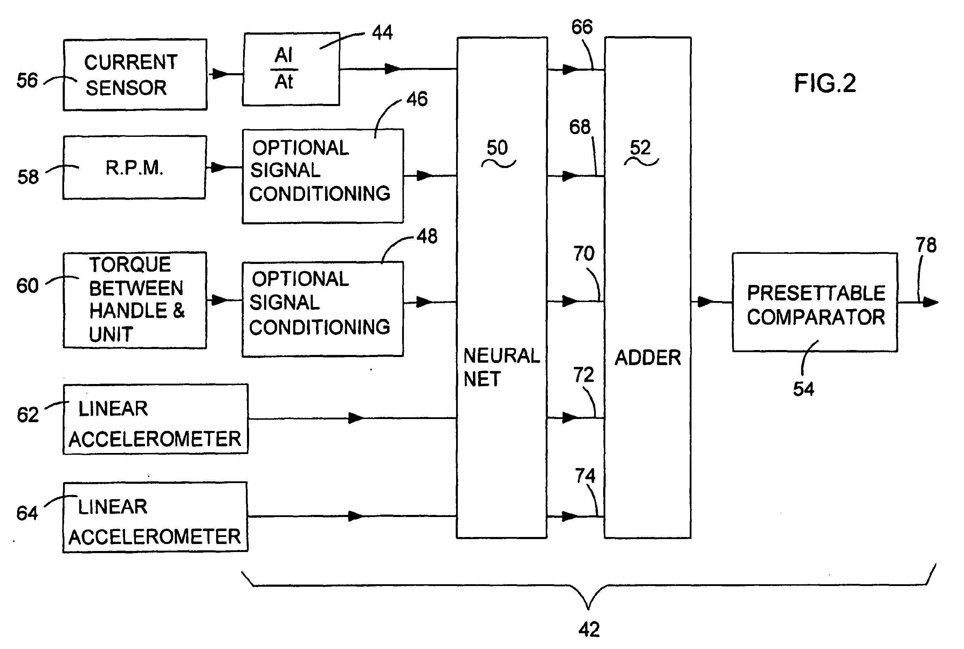

The hammer shown in Figure 1 also incorporates a safety cut-off system, a block diagram of which is shown in Figure 2, for detecting blocking events when the tool or bit (8) becomes blocked in the workpiece and the hammer housing (2) starts to rotate in the hands of the user. The safety cut-off system comprises a central processing unit (42) comprising signal conditioning units (44, 46, 48), neural network unit (50), adder unit (52) and presettable comparator unit (54). In addition, the safety cut-off system comprises a current sensor (56) for detecting the amount of current drawn by the motor (10); an r.p.m. sensor (58) for detecting the number of rotations per minute of the motor (10); a torque sensor (60) for detecting the torque between the rear handle (4) of the hammer and the main housing (2) of the hammer; a first linear accelerometer (62) for detecting acceleration of the hammer housing (2) in a first direction; and a second linear accelerometer (64) for detecting acceleration of the hammer housing (2) in a second direction, perpendicular to the first. The sensors (56, 58, 60, 62, 64) are connected to the central processing unit (42) and the outputs of each sensor are sampled periodically by the central processing unit (42) with a frequency, of around 1 to 5kHz which is sufficiently high for safe and reliable blocking event detection within 100 to 150ms. Not all of the above sensors are necessary to reliably detect a blocking event and it is possible just to use the signals from the linear accelerometers to detect a blocking event.

Some of the signals from the sensors will undergo pre-conditioning before being input into the neural network (50). For example, the pre-conditioning may include filtering in order to remove noise, threshold evaluation, wavelet analysis or Fourier transform analysis. As an example, a set of the signals sampled over a preset time period from the current sensor will be input into unit (44) to generate a signal which represents the rate of change of motor current with time, which latter signal is then input into the neural network (50). The signals from the r.p.m. sensor (58) and torque sensor (60) may undergo pre-filtering to remove excess noise from the signal in repsective pre-conditioning units (46, 48) before the conditioned signal is input into the neural network (50). Other signals, for example those from the linear accelerometers (62, 64) may be input directly into the neural network (50) without undergoing any pre-conditioning.

The neural network (50) is separately trained for each different model of hammer to which it is applied. The neural network (50) used in the hammer of Figure 1 will be trained to associate a set of signals each representing a probability of a blocking event with the input into it from the sensor (56, 58, 60, 62, 64). The set of probability signals (66, 68, 70, 72, 74) are output from the neural network and input into the adder unit (52). In Figure 2 the number of output probability signals (77-74) is equal to the number input sensor signals, but this is not essential.

Thus, for each predetermined time interval (between successive sampling of the sensors) the neural network (50) receives an input from each sensor (56, 58, 60, 62, 64) (via signal conditioning (44, 46, 48) where used) and generates a set of probability signals. Each probability signal (66-74) represents a probability of blocking event dependent on the input sensor signals and the membership function applied to the input signals by the neural network (50) to generate the output probability signal. Then all the probability signals (66-74) output from neural network (50) are summed by the adder unit (52) to generate an overall probability of a blocking event. This probability is then compared with a preset threshold in comparator unit (54). Then, if the preset threshold is exceeded the comparator unit (50) outputs a blocking signal via relay (78) which causes de-coupling of the electromagnetic clutch (38) to disconnect rotary drive to the hollow spindle (32) and thus to the bit or tool (8) and also causes a unit (80) to cut power to and brake the motor (10).

As stated above, the neural network (50) has to be trained for each hammer type on which it is deployed. This is because the detection system according to the present invention is signal based in that a plurality of separate signals characteristic of the hammer's operating conditions are sensed and the neural network (50) is responsive to the input signals which it non-linearly processes. The system according to the present invention is different from the safety cut-off systems known in the prior art and discussed above because it is not based on a physical model of the circumstances that precede a blocking event.

The neural network (50) may be, for example, a wavelet neural network or a Neuro-Fuzzy neural network.

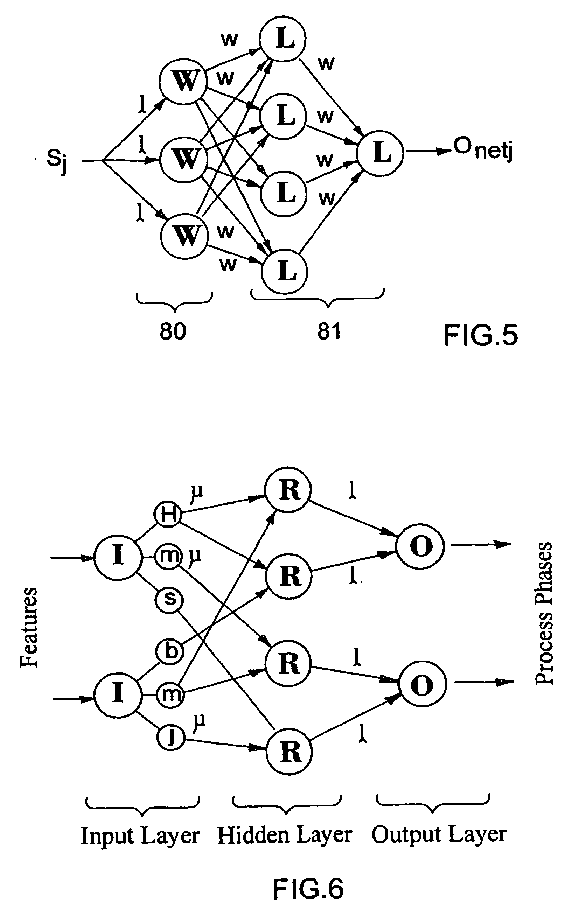

In a Fuzzy-neural network of the type shown in Figure 6, training of the network is required in order to determine the membership functions to be applied to the input sensor signals in order to generate the set of probability signals output from the network. The membership functions will vary for different models of tool. The result of the training will be a membership function associated with each probability signal output. The set of probability signals derived from the membership functions will then undergo addition, probably a weighted addition, in the adder unit (52) to generate an overall blocking function.

After training, the system corresponds to a simple fuzzy system. The employment of learning strategies from neural network theory is used here to support and accelerate the development of a fuzzy logic system, ie. without the use of neural network theory, the membership functions would have to be derived by trial and error. Fuzzy logic provides the possibility of describing knowledge by linguistic rules like:

*If feature I is small and feature n is big*
*Then process phase is......*

Several neuro-fuzzy concepts have been described in the literature, in the present system the NEFCLASS (Neuro Fuzzy CLASSification) approach proposed by Nauck et al is followed. The NEFCLASS model provides a neuro-fuzzy classification approach derived from the generic fuzzy perceptron. The structure of the model is shown in Figure 6 which shows a neural network similar to that of Figure 2 but for processing two instead of the five input signals and for generating two probability signal outputs. The neuro-fuzzy model is characterised by a three layer topology. The input nodes I in the input layer are connected by fuzzy sets $\mu$ with the rule nodes R in the hidden layer. For semantical reasons each rule node R is assigned to a single output node C in the output layer, in order to avoid weighted rules, thus weights are fixed to 1. Weighting can be achieved, if required, by performing a weighted addition of the output probability signals at the adder unit (52). To obtain an optimal classification result, ie an optimal identification of a blocking event, the learning algorithm creates rules and adjusts the fuzzy sets from training examples.

For initialisation the user has to define the initial fuzzy sets for partitioning the domains of the several inputs and the maximum number of rules that may be created in the hidden layer. After training the system corresponds to a simple fuzzy system and the classification knowledge can then easily be accessed and extended by the user.

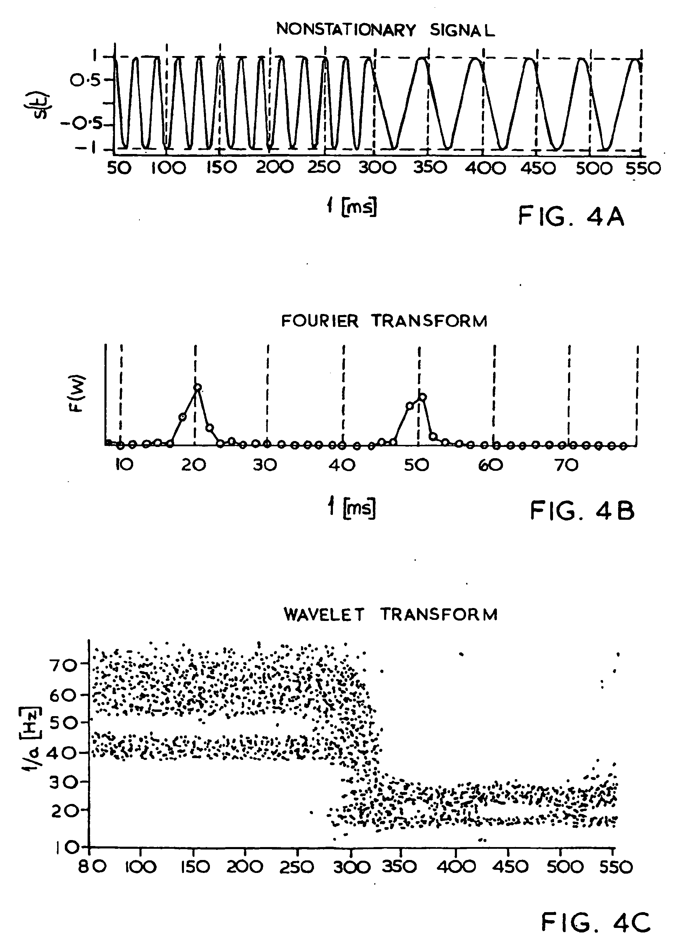

The neural network (50) of Figure 2, may alternatively be a wavelet neural network of the type shown in Figure 3, which includes a wavelet transformation unit (80) and a neural network unit (82). A set of sampled signals from each sensor over a preset time interval will be input into the transformation unit (80). For example a set of sampled signals from one of the sensors could be in the form of the attached Figure 4a. Each signal input into the transformation unit (80) will be transformed using a linear one-dimensional wavelet transform, of the form set out below, into the signal form shown in Figure 4c. A wavelet function will generally have the form:

$$H_{a,b}(t) = \frac{1}{\sqrt{a}} h\left\lceil\frac{t-b}{a}\right\rfloor$$

and the linear one-dimensional wavelet transform will have the form:

$$W(a,b) = \frac{1}{\sqrt{a}} \cdot \int_t s(t) h^{\bullet}_{a,b}\left\lceil\frac{t-b}{a}\right\rfloor dt$$

The variable a represents the scale parameter and b the shift parameter of the wavelet function and h* represents the complex conjugate of h. The weighting factor $1/a^{1/2}$ normalises the wavelet for all values of the scale parameter to a constant energy. In contrast to the Fourier transform, which breaks up the signal s into sine and cosine functions of different frequencies, the wavelet transform uses time limited analysing functions localised in time and frequency by the shift and scale parameters respectively. Wavelet analysing functions h have to satisfy several constraints, which are explained in detail in the literature. Frequently used wavelet functions are modulated windows, i.e. they are composed as a product of two functions, such as an oscillating term that is modulated by a Gaussian function. A typical example of a wavelet function is the real Morlet wavelet:

$$H_{a,b}(t) = \cos\left\lceil\omega_0 \frac{t-b}{a}\right\rfloor \exp\left\lceil-\frac{1}{2}\left\lceil\frac{t-b}{a}\right\rfloor^2\right\rfloor$$

Depending on the scale parameter a, the wavelet function is a dilated low frequency function, whereas for small values of a the wavelet function is constricted, which yields to a high frequency function. Due to the time limited analysing function the wavelet transform is capable of simultaneously providing time and frequency information of a given signal.

As an example in Figure 4a, the given nonstationary signal s(t) is characterised by two different frequencies at different time intervals. With the Fourier transform as shown in Figure 4b, both frequencies can be determined but the information is lost at which time instant the different frequencies occur is lost. On the other hand the wavelet transform provides a time-frequency map of the analysed signal, as shown in Figure 4c, enabling the extraction of frequency features which vary with time. This attribute makes the wavelet transform an ideal tool for feature extraction of nonstationary signals.

The concept of wavelet neural networks (WNNs) for classification combines the aspects of the wavelet transform for the purpose of efficient frequency feature extraction with the decision capabilities of neural network approaches. A WNN can be described as an expanded perceptron with so-called wavelet nodes as a frequency domain feature extraction processing unit. A portion of the wavelet neural network of Figure 3 associated with one of the five input signals is shown schematically in more detail in Figure 5.

The portion of the wavelet layer (80) is composed of wavelet nodes (W) for preprocessing the input signal s(t) and extracting features which are passed to a multilayer perceptron (MLP) (81) which is forms the first processing stage of the neural network (82) of Figure 3. The wavelet nodes (W) apply to the input signal s(t) shifted and modulated versions of a mother wavelet function. The kth wavelet node is described by the shift parameter $b_k$ and the scale parameter $a_k$, corresponding to the parameters of the wavelet transform. Formally, each wavelet node's output is the inner product of the wavelet function $h_k$ and the input signal s(t). Assuming only real valued wavelets, the output o of the kth wavelet node is calculated as follows:

$$o_k(a,b) = \int_t s(t) h_k \left[ \frac{t-b_k}{a} \right] dt$$

The output of the wavelet node can be interpreted as the correlation between the modified wavelet $h_k$ and the input signal s. The MLP (81) represents the classifiaction part, which bases the classification decision on the wavlet nodes' outputs. The neurons (L) in the perceptron layers are interconnected by directed and weighted links. A neuron's output is processed by all neurons in the succeeding layer and its inputs are the weighted outputs of the neurons in the preceding layer. A neuron's output $o_m$ is defined by the weighted sum of the k outputs $o_{n,k}$ of the previous layer n and its activation function. In the diagnosis scheme used here, sigmoid activation functions are used. An output of a neuron in the layer m is claculated as follows:

$$o_m = \left[ 1 + \exp \left[ -\sum_k w_{k,m} o_{n,k} \right] \right]^{-1}$$

During the training phase the training patterns $s_j$ are repeatedly propagated throughout the network and the parameters are adjusted to minimise the least-square error E of the distance between the desired output d and the network output $O_{net}$, as follows:

$$E = \frac{1}{2} \sum_j (d_j - o_{net})^2 = \min$$

The minimisation problem is solved by an iterative gradient technique, the so-called generalised delta-rule. By backpropagation (BP) of the output error the parameters of the neural network are adjusted by calculating the partial derivatives of the error with respect to the parameters of the network, ie. the weights $w_{ij}$, the shifts $b_k$ and the scales $a_k$. For a complete derivation of the learning algorithm , several approaches have been presented in the literature.

The use of a wavelet transformation enables time frequency representations of input signals to be derived which enable the extraction of features of the input signal that vary with time. The signals derived from this first stage of processing are then input into the neural network (82) which is arranged in a conventional way. Again the neural network (82) would be trained for each model of hammer on which the wavelet neural network is deployed and the neural network (82) would be different for different models of hammer.

**Claims**

1. A safety cut-off system for a hand held electrically powered tool with a rotatingly driven bit (8) for preventing accidents caused by the bit becoming jammed, said system comprising:

    at least one sensor (56, 58, 60, 62, 64) for detecting an operating condition of the tool and generating a sensor signal representative of the operating condition;
    a cut-off arrangement (38, 80) for interrupting a rotary drive to the bit from a motor (10);
    a processing unit (42) responsive to the sensor signal or signals for generating a summed probability signal representing a probability of a blocking event and when the summed probability signal exceeds a pre-set threshold for causing activation of the cut-off arrangement;
    **characterised in that:**

    the processing unit includes a neural network (50, 80, 81, 82).

2. A system according to claim 1 wherein the cut-off arrangement is a clutch (38) which interrupts transmission through a drive gear arrangement (18, 36) between the motor (10) and the bit (8).

3. A system according to claim 1 or claim 2 wherein the cut-off arrangement comprises a motor brake (80) for braking the motor (10).

4. A system according to any one of the preceding claims wherein the or one of the sensors is a rotary or a linear accelerometer (62, 64).

5. A system according to any one of the preceding claims wherein the or one of the sensors is a rotation sensor (58) for sensing the rotations per unit time of the motor.

**6.** A system according to any one of the preceding claims wherein the or one of the sensors is a torque sensor (60) for sensing the torque between a handle (4) of the tool and a main housing (2) of the tool.

**7.** A system according to any one of the preceding claims wherein the or one of the sensors is a current sensor (56) for sensing the current drawn by the motor (10).

**8.** A system according to any one of the preceding claims wherein the processing unit additionally includes one or more signal conditioning units (44, 46, 48) for processing the signal from a corresponding sensor (56, 58, 60) to generate a pre-conditioned signal and for inputting the pre-conditioned signal into the neural network (50).

**9.** A system according to any one of the preceding claims wherein the threshold is adjustable.

**10.** A system according to any one of the preceding claims wherein the processing unit includes:

a neural network (50, 80, 81, 82) for generating a set of probability signals each probability signal comprising a function of the or a plurality of the sensor signals;
an adder (52) for adding the set of probability signals to generate the summed probability signal; and
a comparator (54) for generating a cut-off signal (78) for activating the cut-off arrangement when the summed probability signal exceeds the pre-set threshold.

**11.** A system according to any one of the preceding claims wherein the neural network is a fuzzy neural network which processes the sensor signals using fuzzy logic.

**12.** A system according to any one of the preceding claims wherein the neural network is a wavelet neural network (80, 81, 82) in which the or at least one of the sensor signals undergoes a wavelet transformation.

**13.** A rotary hammer having a safety cut-off system according to any one of the preceding claims.

**14.** A method for shutting-off rotary drive to a rotatingly driven bit (8) of a hand held electrically powered tool in order to prevent accidents caused by the bit becoming jammed, said method comprising the steps of:

detecting one or more operating conditions of the tool and generating a sensor signal representative of the or each operating condition;
generating in response to the sensor signal or signals a summed probability signal representing a probability of a blocking event;
causing generation of a cut-off signal (78) when the summed probability signal exceeds a preset threshold; and
using the cut-off signal to actuate the shutting-off of rotary drive to the bit, **characterised in that**

the step of generating a summed probability signal utilises neural network processing steps.

**15.** A method according to claim 14 comprising the additional step of processing the one or more of the sensor signal to generate a pre-conditioned signal before the step of generating the summed probability signal.

**16.** A method according to any one of claims 14 or 15 wherein the threshold is adjustable.

**17.** A method according to any one of claims 14 to 16 wherein the generation of the summed probability signal comprises the steps of:

generating a set of probability signals using neural network processing steps each probability signal comprising a function of the or a plurality of the sensor signals; and
adding the set of probability signals to generate the summed probability signal.

**18.** A method according to any one of claims 14 to 17 wherein the neural network processing steps processes the sensor signals using fuzzy logic.

**19.** A method according to any one of claims 14 to 17 wherein the neural network processing steps include applying a wavelet transformation to the or at least one of the sensor signals.

**Patentansprüche**

**1.** Sicherheitsabschaltsystem für ein tragbares elektrisch angetriebenes Werkzeug mit einem drehend angetriebenen Werkzeugeinsatz (8) zum Verhindern von Unfällen, die durch einen sich verklemmenden Werkzeugeinsatz verursacht werden, wobei das System umfasst:

wenigstens einen Sensor (56, 58, 60, 62, 64) zum Erfassen eines Betriebszustands des Werkzeugs und Erzeugen eines Sensorsignals, das den Betriebszustand wiedergibt,
eine Abschaltanordnung (38, 80) zum Unterbrechen eines Drehantriebs zu dem Werkzeugeinsatz von einem Motor (10),

eine Verarbeitungseinheit (42), die auf das Sensorsignal oder die Sensorsignale anspricht, um ein summiertes Wahrscheinlichkeitssignal zu erzeugen, das eine Wahrscheinlichkeit für einen Blockierfall wiedergibt, und, wenn das summierte Wahrscheinlichkeitssignal eine vorgegebene Schwelle überschreitet, um eine Aktivierung der Abschaltanordnung zu veranlassen, **dadurch gekennzeichnet, dass**

die Verarbeitungseinheit ein neuronales Netzwerk (50, 80, 81, 82) umfasst.

2. System nach Anspruch 1, wobei die Abschaltanordnung eine Kupplung (38) ist, die die Übertragung durch eine Antriebsgetriebeanordnung (18, 36) zwischen dem Motor (10) und dem Werkzeugeinsatz (8) unterbricht.

3. System nach Anspruch 1 oder 2, wobei die Abschaltanordnung eine Motorbremse (80) zum Bremsen des Motors (10) umfasst.

4. System nach einem der vorhergehenden Ansprüche, wobei der oder einer der Sensoren ein Dreh- oder Linearbeschleunigungsmesser (62, 64) ist.

5. System nach einem der vorhergehenden Ansprüche, wobei der oder einer der Sensoren ein Drehsensor (58) zum Erfassen der Umdrehungen pro Zeiteinheit des Motors ist.

6. System nach einem der vorhergehenden Ansprüche, wobei der oder einer der Sensoren ein Drehmomentsensor (60) zum Erfassen des Drehmoments zwischen einem Griff (4) des Werkzeugs und einem Hauptgehäuse (2) des Werkzeugs ist.

7. System nach einem der vorhergehenden Ansprüche, wobei der oder einer der Sensoren ein Stromsensor (56) zum Erfassen des Stroms ist, der von dem Motor (10) gezogen wird.

8. System nach einem der vorhergehenden Ansprüche, wobei die Verarbeitungseinheit zusätzlich ein oder mehrere Signalbearbeitungseinheiten (44, 46, 48) zum Bearbeiten des Signals von einem entsprechenden Sensor (56, 58, 60) umfasst, um ein vorbearbeitetes Signal zur Eingabe des vorbearbeiteten Signals in das neuronale Netzwerk (50) zu erzeugen.

9. System nach einem der vorhergehenden Ansprüche, wobei die Schwelle einstellbar ist.

10. System nach einem der vorhergehenden Ansprüche, wobei die Verarbeitungseinheit umfasst:

ein neuronales Netzwerk (50, 80, 81, 82) zum Erzeugen eines Satzes von Wahrscheinlichkeitssignalen, wobei jedes Wahrscheinlichkeitssignal eine Funktion von dem oder einer Vielzahl der Sensorsignale umfasst,

eine Summiereinrichtung (52) zum Addieren des Satzes von Wahrscheinlichkeitssignalen, um das summierte Wahrscheinlichkeitssignal zu erzeugen, und

eine Vergleichseinrichtung (54) zum Erzeugen eines Abschaltsignals (78) zum Aktivieren der Abschaltanordnung, wenn das summierte Wahrscheinlichkeitssignal die vorgegebene Schwelle überschreitet.

11. System nach einem der vorhergehenden Ansprüche, wobei das neuronale Netzwerk ein Fuzzy-neuronales Netzwerk ist, das die Sensorsignale unter Verwendung von Fuzzy Logic verarbeitet.

12. System nach einem der vorhergehenden Ansprüche, wobei das neuronale Netzwerk ein Wavelet-neuronales Netzwerk (80, 81, 82) ist, in dem das oder wenigstens eines der Sensorsignale einer Wavelet-Transformation unterzogen wird.

13. Bohrhammer mit einem Sicherheitsabschaltsystem nach einem der vorhergehenden Ansprüche.

14. Verfahren zum Abschalten des Drehantriebs für einen drehend angetriebenen Werkzeugeinsatz (8) eines tragbaren elektrisch angetriebenen Werkzeugs, um Unfälle zu verhindern, die durch einen sich verklemmenden Werkzeugeinsatz verursacht werden, wobei das Verfahren die folgenden Schritte umfasst:

Erfassen von einem oder mehreren Betriebszuständen des Werkzeugs und Erzeugen eines Sensorsignals, das den oder jeden Betriebszustand wiedergibt,

Erzeugen eines summierten Wahrscheinlichkeitssignals in Reaktion auf das Sensorsignal oder die Sensorsignale, das eine Wahrscheinlichkeit für einen Blockierfall wiedergibt, Veranlassen der Erzeugung eines Abschaltsignals (78), wenn das summierte Wahrscheinlichkeitssignal eine vorgegebene Schwelle überschreitet, und

Verwenden des Abschaltsignals, um das Abschalten des Drehantriebs für den Werkzeugeinsatz auszulösen, **dadurch gekennzeichnet, dass**

der Schritt des Erzeugens eines summierten Wahrscheinlichkeitssignals Verarbeitungsschritte eines neuronalen Netzwerks verwendet.

15. Verfahren nach Anspruch 14, das den zusätzlichen Schritt des Verarbeitens von einem oder mehreren der Sensorsignale umfasst, um ein vorverarbeitetes Signal zu erzeugen, bevor der Schritt des Erzeugens des summierten Wahrscheinlichkeitssignals durchgeführt wird.

16. Verfahren nach einem der Ansprüche 14 oder 15, wobei die Schwelle einstellbar ist.

17. Verfahren nach einem der Ansprüche 14 bis 16, wobei die Erzeugung des summierten Wahrscheinlichkeitssignals die folgenden Schritte umfasst:

Erzeugen eines Satzes von Wahrscheinlichkeitssignalen, wobei Verarbeitungsschritte eines neuronalen Netzwerks verwendet werden, wobei jedes Wahrscheinlichkeitssignal eine Funktion von dem oder einer Vielzahl der Sensorsignale umfasst, und
Addieren des Satzes von Wahrscheinlichkeitssignalen, um das summierte Wahrscheinlichkeitssignal zu erzeugen.

18. Verfahren nach einem der Ansprüche 14 bis 17, wobei die Verarbeitungsschritte des neuronalen Netzwerks die Sensorsignale unter Verwendung von Fuzzy Logic verarbeiten.

19. Verfahren nach einem der Ansprüche 14 bis 17, wobei die Verarbeitungsschritte des neuronalen Netzwerks eine Anwendung einer Wavelet-Transformation auf das oder wenigstens eines der Sensorsignale umfassen.

## Revendications

1. Système d'arrêt de sécurité destiné à un outil portatif alimenté de manière électrique avec un foret (8) entraîné à rotation, destiné à éviter des accidents provoqués par un blocage du foret, ledit système comprenant :

au moins un capteur (56, 58, 60, 62, 64) destiné à détecter une condition de fonctionnement de l'outil et à générer un signal de capteur représentatif de la condition de fonctionnement ;
un agencement d'arrêt (38, 80) destiné à interrompre un entraînement en rotation du foret par un moteur (10) ;
une unité de traitement (42) sensible au signal ou aux signaux de capteur, destinée à générer un signal de probabilité sommé qui représente une probabilité d'un événement de blocage et le moment où le signal de probabilité sommé dépasse un seuil préréglé de façon à provoquer l'activation de l'agencement d'arrêt ;

**caractérisé en ce que :**

l'unité de traitement comprend un réseau neuronal (50, 80, 81, 82).

2. Système selon la revendication 1, dans lequel l'agencement d'arrêt est un embrayage (38) qui interrompent une transmission par l'intermédiaire d'un agencement de pignons d'entraînement (18, 36) entre le moteur (10) et le foret (8).

3. Système selon la revendication 1 ou la revendication 2, dans lequel l'agencement d'arrêt comprend un frein de moteur (80) destiné à freiner le moteur (10).

4. Système selon l'une quelconque des revendications précédentes, dans lequel le ou l'un des capteurs est un accéléromètre rotatif ou linéaire (62, 64).

5. Système selon l'une quelconque des revendications précédentes, dans lequel le ou l'un des capteurs est un capteur de rotation (58) destiné à détecter la vitesse de rotation du moteur.

6. Système selon l'une quelconque des revendications précédentes, dans lequel le ou l'un des capteurs est un capteur de couple (60) destiné à détecter le couple entre une poignée (4) de l'outil et un logement principal (2) de l'outil.

7. Système selon l'une quelconque des revendications précédentes, dans lequel le ou l'un des capteurs est un capteur de courant (56) destiné à détecter le courant consommé par le moteur (10).

8. Système selon l'une quelconque des revendications précédentes, dans lequel l'unité de traitement comprend en outre une ou plusieurs unités de conditionnement du signal (44, 46, 48) destinées à traiter le signal qui provient d'un capteur correspondant (56, 58, 60) de manière à générer un signal préconditionné et à entrer le signal préconditionné dans le réseau neuronal (50).

9. Système selon l'une quelconque des revendications précédentes dans lequel le seuil est réglable.

10. Système selon l'une quelconque des revendications précédentes, dans lequel l'unité de traitement comprend :

un réseau neuronal (50, 80, 81, 82) destiné à générer un ensemble de signaux de probabilité, chaque signal de probabilité comprenant une fonction du ou d'une pluralité de signaux de capteur ;
un additionneur (52) destiné à additionner l'ensemble des signaux de probabilité de manière à générer le signal de probabilité sommé ; et un comparateur (54) destiné à générer un signal d'arrêt (78) de façon à activer l'agencement d'arrêt lorsque le signal de probabilité sommé dépasse le seuil préréglé.

**11.** Système selon l'une quelconque des revendications précédentes, dans lequel le réseau neuronal est un réseau neuronal flou qui traite les signaux de capteur en faisant appel à une logique floue.

**12.** Système selon l'une quelconque des revendications précédentes, dans lequel le réseau neuronal est un réseau neuronal d'ondelettes (80, 81, 82) dans lequel le ou au moins l'un des signaux de capteur subit une transformée en ondelelettes.

**13.** Marteau rotatif présentant un système d'arrêt de sécurité selon l'une quelconque des revendications précédentes.

**14.** Procédé destiné à arrêter un entraînement en rotation d'un foret entraîné à rotation (8) d'un outil portatif alimenté de manière électrique de façon à éviter des accidents provoqués par un blocage du foret, ledit procédé comprenant les étapes consistant à :

détecter une ou plusieurs conditions de fonctionnement de l'outil et générer un signal de capteur représentatif de la ou de chaque condition de fonctionnement ;
générer en réponse au signal ou aux signaux de capteur, un signal de probabilité sommé qui représente une probabilité d'un événement de blocage ;
provoquer la génération d'un signal d'arrêt (78) lorsque le signal de probabilité sommé dépasse un seuil préréglé ; et
utiliser le signal d'arrêt de façon à actionner l'arrêt de l'entraînement rotatif du foret ;

**caractérisé en ce que :**

l'étape consistant à générer un signal de probabilité sommé fait appel aux étapes de traitement du réseau neuronal.

**15.** Procédé selon la revendication 14, comprenant l'étape supplémentaire consistant à traiter le ou les signaux de capteur de manière à générer un signal préconditionné avant l'étape consistant à générer le signal de probabilité sommé.

**16.** Procédé selon l'une quelconque des revendications précédentes 14 ou 15, dans lequel le seuil est réglable.

**17.** Procédé selon l'une quelconque des revendications 14 à 16, dans lequel la génération du signal de probabilité sommé comprend les étapes consistant à :

générer un ensemble de signaux de probabilité en faisant appel aux étapes de traitement d'un réseau neuronal, chaque signal de probabilité comprenant une fonction du ou d'une pluralité de signaux de capteur ; et
additionner l'ensemble des signaux de probabilité de manière à générer le signal de probabilité sommé.

**18.** Procédé selon l'une quelconque des revendications 14 à 17, dans lequel les étapes de traitement du réseau neuronal traitent les signaux de capteur en faisant appel à une logique floue.

**19.** Procédé selon l'une quelconque des revendications 14 à 17, dans lequel les étapes de traitement du réseau neuronal comprennent l'application d'une transformée en ondelettes du ou des signaux de capteur.

FIG.1

FIG. 3

FIG.2

56 — CURRENT SENSOR → $\frac{AI}{At}$ (44)

58 — R.P.M. → OPTIONAL SIGNAL CONDITIONING (46)

60 — TORQUE BETWEEN HANDLE & UNIT → OPTIONAL SIGNAL CONDITIONING (48)

62 — LINEAR ACCELEROMETER

64 — LINEAR ACCELEROMETER

NEURAL NET (50)

ADDER (52)

PRESETTABLE COMPARATOR (54) → 78

66, 68, 70, 72, 74

42

EP 1 398 119 B1

## NONSTATIONARY SIGNAL

FIG. 4A

## FOURIER TRANSFORM

FIG. 4B

## WAVELET TRANSFORM

FIG. 4C

FIG.5

Input Layer    Hidden Layer    Output Layer

FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5584619 A
- US 5914882 A